(19) Europäisches Patentamt
European Patent Office
Office européen des brevets

(11) EP 1 919 067 B1

(12) # EUROPÄISCHE PATENTSCHRIFT

(45) Veröffentlichungstag und Bekanntmachung des Hinweises auf die Patenterteilung:
**29.04.2009 Patentblatt 2009/18**

(51) Int Cl.:
***H02M 3/335*** *(2006.01)*

(21) Anmeldenummer: **06022720.4**

(22) Anmeldetag: **31.10.2006**

(54) **Ansteuerschaltung für einen Schalter in einem Schaltwandler mit Burst-Betriebsmodus**

Control circuit for a switch in a switched mode power supply with burst mode

Circuit de contrôle pour un commutateur dans une alimentation à découpage avec mode rafale

(84) Benannte Vertragsstaaten:
**DE FR GB IT**

(43) Veröffentlichungstag der Anmeldung:
**07.05.2008 Patentblatt 2008/19**

(73) Patentinhaber: **Infineon Technologies Austria AG**
**9500 Villach (AT)**

(72) Erfinder: **Hu, Jing, Dr.**
**85579 Neubiberg (DE)**

(74) Vertreter: **Patentanwälte**
**Westphal, Mussgnug & Partner**
**Herzog-Wilhelm-Strasse 26**
**80331 München (DE)**

(56) Entgegenhaltungen:
**WO-A-20/04030194**
**DE-A1- 10 146 549**
**DE-A1- 10 205 706**
**US-A- 4 937 738**
**US-A- 5 703 764**
**US-A- 6 166 926**
**US-A1- 2003 117 813**
**US-A1- 2004 120 171**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 919 067 B1

Printed by Jouve, 75001 PARIS (FR)

## Beschreibung

Die vorliegende Erfindung betrifft eine Ansteuerschaltung für einen Schalter in einem Schaltwandler mit Standby-Betrieb.

Es ist bekannt, Schaltwandler bei niedriger Leistungsaufnahme einer durch den Schaltwandler versorgten Last, im sogenannten Burst-Betrieb zu betreiben. Ein die Leistungsaufnahme des Schaltwandlers regelnder, in Reihe zu einem induktiven Speicherelement geschalteter Schalter wird hierbei intervallweise (burst-weise) durch eine Folge von Ansteuerimpulsen angesteuert, wobei zwischen den einzelnen Ansteuerintervallen jeweils Ansteuerpausen liegen. Ein Wechsel zwischen Ansteuerpausen und Ansteuerintervallen kann hierbei abhängig von einem Vergleich eines von einer Ausgangsspannung des Schaltwandlers abhängigen und die Leistungsaufnahme bestimmenden Regelsignals mit einem ersten und einem zweiten Referenzwert erfolgen.

Schaltwandler, die einen Burst-Betriebszustand annehmen können, sind beispielsweise in der US 4,937,738, der US 5,703,764, der US 6,166,926, der DE 102 05 706 A1 oder der US 2003/0117813 A1, der DE 101 46 549 A1, der WO 2004/030194 A1, der DE 102 05 706 A1 beschrieben.

Aufgabe der vorliegenden Erfindung ist es, eine Ansteuerschaltung zur Ansteuerung eines Schalters in einem Schaltwandler zur Verfügung zu stellen, bei dem ein Schwellenwert des Regelsignals, bei dem zwischen einem Normalbetrieb und einem Hurst-Betrieb umgeschaltet wird, auf einfache Weise einstellbar ist.

Diese Aufgabe wird durch eine Ansteuerschaltung nach Anspruch 1 gelöst. Vorteilhafte Ausgestaltungen der Erfindung sind Gegenstand der Unteransprüche.

Diese Ansteuerschaltung für einen in Reihe zu einem induktiven Speicherelement geschalteten Schalter in einem Schaltwandler umfasst einen Ausgang zur Bereitstellung eines Ansteuersignals für den Schalter, einen Messeingang zum Zuführen eines von einem Strom durch den Schalter abhängigen Messsignals, einen Regelsignaleingang zum Zuführen eines eine Leistungsaufnahme regelnden Regelsignals und eine Signalerzeugungsschaltung die das Ansteuersignal erzeugt. Der Signalerzeugungsschaltung ist ein Versorgungspotential zugeführt und die Signalerzeugungsschaltung ist dazu ausgebildet, abhängig von dem Regelsignal einen Burst-Betriebszustand anzunehmen, bei dem zeitlich wenigstens eine Impulsperiode, während der ein Ansteuersignal zur getakteten Ansteuerung des Schalters erzeugt wird, und eine Ansteuerpause, bei der ein Ansteuersignal zur sperrenden Ansteuerung des Schalters erzeugt wird, aufeinanderfolgen. Ein Wechsel zwischen der Impulsperiode und der Ansteuerpause erfolgt dabei abhängig von einem Vergleich des Regelsignals mit einem ersten und zweiten Referenzsignal, von denen wenigstens eines von dem Versorgungspotential der Signalerzeugungsschaltung abhängig ist.

Ausführungsbeispiele der vorliegenden Erfindung werden nachfolgend anhand von Figuren näher erläutert.

Figur 1 zeigt einen Schaltwandler mit einem in Reihe zu einem induktiven Speicherelement geschalteten Schalter und mit einer Ansteuerschaltung für diesen Schalter.

Figur 2 veranschaulicht die Erzeugung eines Ansteuersignals für den Schalter durch die Ansteuerschaltung während eines Normalbetriebszustandes und eines Burst-Betriebszustandes des Schaltwandlers.

Figur 3 veranschaulicht einen Zustandsübergang des Schaltwandlers vom Normalbetriebszustand in den Burst-Betriebszustand und wieder in den Normalbetriebszustand sowie Übergänge zwischen Ansteuerintervallen und Ansteuerpausen während des Burst-Betriebszustandes.

Figur 4 zeigt ein Ausführungsbeispiel einer Ansteuersignalerzeugungsschaltung der Ansteuerschaltung.

Figur 5 zeigt ein Ausführungsbeispiel einer Referenzsignalerzeugungsschaltung, die ein Abtast- und Halteglied aufweist, für die Ansteuersignalerzeugungsschaltung.

Figur 6 zeigt ein erstes Realisierungsbeispiel des Abtast- und Halteglieds.

Figur 7 zeigt ein zweites Realisierungsbeispiel des Abtast- und Halteglieds.

Figur 8 zeigt ein Ausführungsbeispiel eines Pulsweitenmodulators der Ansteuersignalerzeugungsschaltung.

In den Figuren bezeichnen, sofern nicht anders angegeben, gleiche Bezugszeichen gleiche Schaltungskomponenten und Signale mit gleicher Bedeutung.

Zum besseren Verständnis einer erfindungsgemäßen Ansteuerschaltung für einen Schalter in einem Schaltwandler zeigt Figur 1 ein elektrisches Ersatzschaltbild eines Schaltwandlers, in dem neben einer Ansteuerschaltung 1 für einen in Reihe zu einem induktiven Speicherelement L1 geschalteten Schalter T weitere Schaltungskomponenten des Schaltwandlers dargestellt sind. Ein solcher Schaltwandler dient zur Erzeugung einer geregelten Ausgangsspannung Vout an Ausgangsklemmen des Schaltwandler aus einer an Eingangsklemmen anliegenden Eingangsspannung Vin. Diese Eingangsspannung Vin ist eine Gleichspannung, die beispielsweise durch ein Eingangsfilter 6 mit einem Brükkengleichrichter D1-D4 und einem Eingangskondensator Cin beispielsweise aus einer Wechselspannung Vin' erzeugt sein kann. Der dargestellte Schaltwandler ist als Sperrwandler ausgebildet und weist einen Transformator TR mit einer Primärwicklung und einer Sekundärwicklung auf, dessen Primärwicklung L1 in Reihe zu dem Schalter T geschaltet ist. Über dieser Reihenschaltung mit der Primärwicklung L1 und dem Schalter T, die zwischen eine Klemme für die Eingangsspannung bzw. das Eingangpotential Vin und eine Klemme für ein primärseitiges Bezugspotential GND1 geschaltet ist, liegt hierbei die Eingangsspannung Vin an.

Der Schalter T des in Figur 1 dargestellten Schaltwandlers ist als MOS-Transistor, speziell als n-Kanal-MOSFET, realisiert und durch ein von der Ansteuerschaltung 1 erzeugtes Ansteuersignal S2 angesteuert. Das Ansteuersignal S2 ist hierbei einem Gate-Anschluss des MOSFET T zugeführt. Es sei darauf hingewiesen, dass anstelle des dargestellten n-MOSFET selbstverständlich beliebige weitere Halbleiterschaltelemente, insbesondere p-MOSFET oder IGBT, als Schalter eingesetzt werden können.

Der Transformator TR weist eine Sekundärwicklung L2 auf, an die eine Gleichrichterschaltung 8 angeschlossen ist, die die Ausgangsspannung Vout an den Ausgangsklemmen zur Verfügung stellt. Bedingt durch die Funktionsweise des Schaltwandlers steht an der Sekundärwicklung L2 eine impulsförmige Spannung zur Verfügung, die durch die Gleichrichterschaltung in eine gleichförmige Ausgangsspannung Vout umgesetzt wird. Die in dem Beispiel dargestellte Gleichrichterschaltung umfasst einen ersten Gleichrichter mit einer Diode D8 und einem Kondensator C8 und einen dem ersten Gleichrichter nachgeschalteten zweiten Gleichrichter. Der zweite Gleichrichter umfasst weist eine Induktivität L8 und einen Kondensator Cout auf, wobei der Kondensator Cout des LC-Glieds einen Ausgangskondensator des Schaltwandler bildet. Es sei darauf hingewiesen, dass die in Figur 1 dargestellte zweistufige Gleichrichteranordnung 8 nur beispielhaft anzusehen ist und dass beliebige, die zuvor erwähnte Gleichrichterfunktion erfüllende Gleichrichterschaltungen eingesetzt werden können.

Der dargestellte Schaltwandler nimmt bei leitend angesteuertem Schalter T Energie über die Eingangsklemmen auf, die in der Primärwicklung L1 zwischengespeichert wird. Bei anschließend sperrend angesteuertem Schalter T wird diese zuvor in der Primärwicklung L1 gespeicherte Energie an die Sekundärwicklung L2 und über die Gleichrichterschaltung 8 an die Ausgangsklemmen übertragen. Das den Schalter T ansteuernde Ansteuersignal S3 ist ein pulsweitenmoduliertes Signal, dessen Tastverhältnis (Duty-Cycle) während eines noch zu erläuternden Normalbetriebszustandes die Leistungsaufnahme des Schaltwandlers bestimmt. Zur Regelung der Leistungsaufnahme, die mit dem Ziel erfolgt, die Ausgangspannung Vout wenigstens annähernd unabhängig von der Eingangsspannung Vin und wenigs- ... tens annähernd unabhängig von der Leistungsaufnahme einer an die Ausgangsklemmen anschließbaren Last Z konstant zu halten, steht ein Regelsignal Vreg zur Verfügung.

Dieses Regelsignal Vreg wird durch eine Regelsignalerzeugungsschaltung abhängig von der Ausgangsspannung Vout erzeugt und ist der Ansteuerschaltung 1 über einen Regelsignaleingang 13 zugeführt. Das Regelsignal Vreg steht in dem dargestellten Beispiel über einem Kondensator Creg zur Verfügung. Dieser Kondensator bewirkt ein integrierendes Regelverhalten. Um einen Regelsignalwert bereits unmittelbar nach einem Einschalten des Schaltwandlers zur Verfügung stellen zu können, kann der Kondensator Creg - beispielsweise über einen Widerstand - an eine Klemme für ein Versorgungspotential Vdd in der Ansteuerschaltung angeschlossen sein. Dieses Versorgungspotential gibt einen Anfangswert des Regelsignals vor, der im weiteren Verlauf der Regelung abhängig von der Ausgangsspannung variiert wird.

Die dargestellte Regelsignalerzeugungsschaltung 9 ist dazu ausgebildet, die Ausgangsspannung Vout mit einem Referenzwert zu vergleichen und das Regelsignal Vreg so zu erzeugen bzw. zu verändern, dass das Regelsignal mit zunehmender Differenz zwischen der Ausgangsspannung Vout und dem Referenzwert kleiner wird, wenn die Ausgangsspannung Vout größer als der Referenzwert ist, und dass das Regelsignal Vreg mit steigender Differenz zwischen dem Referenzwert und der Ausgangsspannung Vout größer wird, wenn die Ausgangsspannung Vout kleiner als der Referenzwert ist.

Die Regelschaltung 9 ist bei dem in Figur 1 dargestellten Schaltwandler sekundärseitig angeordnet, die Übertragung eines durch diese Regelschaltung 9 erzeugten Regelsignals zu der primärseitig angeordneten Ansteuerschaltung 1 erfolgt über einen Optokoppler 10, der primärseitig an den Regelkondensator Creg angeschlossen ist, über dem eine Spannung zur Verfügung steht, die das rückgekoppelte Regelsignal Vreg bildet. Die Regelschaltung 9 weist einen an den Ausgang angeschlossenen Spannungsteiler 94, 98 mit einem Mittenabgriff, an dem ein von der Ausgangsspannung Vout abhängiges Messsignal zur Verfügung steht, auf. Der Mittenabgriff ist an eine Vergleichs- und Treiberschaltung 99 angeschlossen, die das Messsignal mit einem Referenzwert, der beispielsweise der Sperrspannung einer Zenerdiode entspricht, vergleicht und die an den Optokoppler angeschlossen ist. Ein durch diese Schaltung 99 dem Optokoppler eingeprägter Strom ist hierbei von einem Vergleich des Messsignals mit dem Referenzsignal abhängig. Eine Spannungsversorgung der Regelschaltung 9 und des Optokopplers 10 erfolgt in dem Beispiel über den Kondensator C8 der Gleichrichteranordnung 8, an den der Optokoppler über einen Widerstand 92 und die Vergleichs- und Treiberschaltung 99 über einen Widerstand 93 angeschlossen ist. Ein Filter 95, 96, 97, das zwischen den Widerstand 93 und den Mittenabgriff des Spannungsteilers geschaltet ist, dient zur Regelung der Ausgangsspannung.

Die Ansteuerschaltung 1 weist eine Ansteuersignalerzeugungsschaltung 2 auf, die das Ansteuersignal S2 für den Schalter T abhängig von dem Regelsignal Vreg und einem Strommesssignal Vcs erzeugt. Optional ist zwischen diese Ansteuersignalerzeugungsschaltung 2 und den Ausgang 11, an dem das Ansteuersignal S2 zur Verfügung steht, eine Treiberschaltung 3 geschaltet, die dazu dient, einen Signalpegel des durch die Ansteuersignalerzeugungsschaltung 2 bereitgestellten Ansteuersignals auf geeignete Signalpegel zur Ansteuerung des Schalters T umzusetzen.

Optional ist außerdem eine Schutzschaltung 5 vorhanden, die beispielsweise dazu dient, den Schaltwandler bei Detektion eines Fehlerzustandes abzuschalten, indem eine Ansteuerschaltung des Schalters T über die Ansteuersignalerzeugungsschaltung 2 bzw. den Treiber 3 unterbrochen wird. Die Detektion eines Fehlers kann beispielsweise über das Regelsignal Vreg oder das Strommesssignal Vcs erfolgen.

Die Ansteuerschaltung 1 weist außerdem eine interne Spannungsversorgungsschaltung auf, die dazu dient, eine Spannungsversorgung der in der Ansteuerschaltung 1 vorhandenen Schaltungskomponenten zu gewährleisten. Diese interne Spannungsversorgungsschaltung 4 ist über eine erste Klemme 15 an die Eingangsspannung Vin und über eine zweite Klemme 16 an eine externe Spannungsversorgungsschaltung 7 angeschlossen. Die externe Spannungsversorgungsschaltung 7 umfasst eine induktiv mit der Primärwicklung L1 und der Sekundärwicklung L2 gekoppelte Hilfswicklung L3 und eine an diese Hilfswicklung L3 gekoppelte Gleichrichteranordnung mit einer Reihenschaltung einer Diode D7 und einem Kondensator C7. Optional ist außerdem ein Widerstand R7 in Reihe zu diesen Bauelementen geschaltet. Eine Versorgungsspannung Vcc steht bei dieser externen Spannungsversorgungsschaltung 7 über dem Kondensator C7 zur Verfügung. Ein erstes Aufladen des Kondensators C7 über die Hilfswicklung L3 erfordert zuvor einen Stromfluss durch die Primärwicklung L1 und damit eine leitende Ansteuerung des Schalters T. Um eine Spannungsversorgung der Ansteuerschaltung 1 während einer Anlaufphase, bei der noch keine ausreichende Versorgungsspannung über dem Kondensator C7 anliegt, zur Verfügung zu stellen, ist die interne Spannungsversorgungsschaltung 4 an die Eingangsklemmen gekoppelt, wodurch eine anfängliche Spannungsversorgung gewährleistet ist. Aufgrund einer üblicherweise hohen Spannungsdifferenz zwischen der Eingangsspannung Vin und der für die Spannungsversorgung der Ansteuerschaltung 1 benötigten Versorgungsspannung ist das Bereitstellen dieser Versorgungsspannung aus der Eingangsspannung Vin mit hohen Verlusten verbunden, so dass die Spannungsversorgung über die Eingangsspannung Vin lediglich während einer Anlaufphase des Schaltwandlers erfolgt. Die interne Spannungsversorgungsschaltung 4 ist hierzu entsprechend konfiguriert und kann in grundsätzlich bekannter Weise realisiert sein. So kann in der Spannungsversorgungsschaltung 4 beispielsweise ein Schalter 41 vorgesehen sein, der die Klemme für die Versorgungsspannung Vcc abhängig von einer Spannung über dem Kondensator C7 an die Klemme für die Eingangsspannung Vin anschließt. Dieser Schalter ist beispielsweise geschlossen, wenn die Spannung über dem Kondensator C7 unterhalb eines vorgegebenen Schwellenwertes liegt, um den Kondensator C7 dann über die Eingangsspannung Vin zu laden.

Die Ansteuersignalerzeugungsschaltung 2 kann zwei unterschiedliche Betriebszustände annehmen, einen Normalbetriebszustand und einen sogenannten Burst-Betriebszustand, die nachfolgend anhand der Figuren 2A und 2B erläutert werden. Figur 2A veranschaulicht die Erzeugung des Ansteuersignals S2 abhängig von einem Strommesssignal Vcs' und dem Regelsignal Vreg während des Normalbetriebszustandes. Das dargestellte Strommesssignal Vcs' ist hierbei abhängig von der über dem Messwiderstand (Rcs in Figur 1) anliegenden Messspannung Vcs, und kann proportional zu dieser Messspannung Vcs sein, so dass gilt:

$$Vcs' \sim Vcs \qquad (1).$$

Das Strommesssignal kann auch proportional sein zu einer offsetbehafteten Messspannung, so dass gilt:

$$Vcs' \sim Vcs + V_{offset} \qquad (2),$$

wobei $V_{offset}$ einen Offsetwert bezeichnet.

Während dieses Normalbetriebszustandes werden Ansteuerimpulse des Ansteuersignals S2 im Takt eines Taktsignals erzeugt. Eine Periodendauer dieses Taktsignals ist in Figur 2a mit Tclk bezeichnet. Die Dauer der einzelnen Ansteuerimpulse ist hierbei abhängig von dem Regelsignal Vreg und dem Strommesssignal Vcs. Der in Figur 1 dargestellte Schaltwandler ist als sogenannter Current-Mode-Schaltwandler ausgebildet. Bei einer leitenden Ansteuerung des Schalters T steigt der Strom durch den Schalter T, und damit ein Spannungsabfall Vcs über einem in Reihe zu dem Schalter T geschalteten Strommesswiderstand Rcs, linear an. Der Schalter T bleibt hierbei solange geschlossen, bis das Strommesssignal Vcs den Wert des Regelsignals Vreg bzw. den Wert eines zum dem Regelsignal Vreg proportionalen Signals erreicht. Die Leistungsaufnahme des Schaltwandlers ist dabei um so größer, je länger die einzelnen Ansteuerimpulse sind. Sinkt die Ausgangsspannung Vout infolge einer höheren Leistungsaufnahme einer angeschlossenen Last, so sinkt die Ausgangsspannung zunächst ab, wodurch die Amplitude des Regelsignals Vreg zunimmt und die Zeitdauern der Ansteuerimpulse ebenfalls zunehmen, um die Leistungsaufnahme zu erhöhen und dadurch einem weiteren Absinken der Ausgangsspannung Vout entgegenzuwirken. Sinkt hingegen die Leistungsaufnahme der last Z und vergrößert sich dadurch zunächst die Ausgangsspannung Vout, so verkleinert sich das Regelsignal, wodurch sich die Ansteuerimpulse verkürzen um die Leistungsaufnahme zu reduzieren und einem Weiteren Ansteigen der Ausgangsspannung Vout entgegenzuwirken.

Im Burst-Betriebsmodus erzeugt die Ansteuersignalerzeugungsschaltung 2 das Ansteuersignal S2 derart, dass sich Ansteuerintervalle und Ansteuerpausen abwechseln. Während Ansteuerintervallen von den eines in Figur 2B dargestellt und mit T1 bezeichnet ist, erfolgt eine getaktete Ansteuerung des Schalters T durch jeweils gleich lange Ansteuerimpulse, die im Takt eines Taktsignals erzeugt werden können. Eine Periodendauer Tclk dieses Taktsignals während des Burst-Betriebs kann hierbei einer Periodendauer des Taktsignals während des Normalbetriebs entsprechen. Tbp in Figur 2B bezeichnet die Impulsdauer eines Ansteuerimpulses während des Burst-Betriebsmodus. Während einer Ansteuerpause, die in Figur 2B mit T2 bezeichnet ist, erfolgt dauerhaft eine sperrende Ansteuerung des Schalters T über das Ansteuersignal S2.

Ein Wechsel der Ansteuerschaltung 1 bzw. des Schaltwandlers vom Normalbetriebsmodus in den Burst-Betriebsmodus erfolgt abhängig von dem Regelsignal Vreg, was nachfolgend anhand von Figur 3 erläutert wird. Figur 3 veranschaulicht beispielhaft einen zeitlichen Verlauf des Regelsignals Vreg sowie den jeweiligen Betriebszustand des Schaltwandlers, wobei N den Normalbetriebszustand und B den Burst-Betriebszustand bezeichnet. Für die Darstellung in Figur 3 wird angenommen, dass sich der Schaltwandler zunächst im Normalbetrieb N befindet und dass bedingt durch eine niedrige Leistungsaufnahme einer an den Schaltwandler angeschlossenen Last das Regelsignal Vreg zu einem Zeitpunkt t1 den Wert eines ersten Referenzsignals Vben erreicht bzw. unterschreitet. Zu diesem Zeitpunkt t1 erfolgt ein Übergang in den Burst-Betrieb B, der in dem Beispiel mit einer Ansteuerpause beginnt. Infolge der sperrenden Ansteuerung des Schalters T während dieser Ansteuerpause sinkt die Ausgangsspannung Vout ab, wodurch das Regelsignal Vreg ansteigt. Das Regelsignal Vreg erreicht zu einen zweiten Zeitpunkt t2 einen zweiten Referenzwert Vbon, bei dem innerhalb des Burst-Betriebszustandes von einer Ansteuerpause auf ein Ansteuerintervall umgeschaltet wird, während dem der Schalter T in der anhand von Figur 2B erläuterten Weise getaktet angesteuert wird.

Davon ausgehend, dass die Leistungsaufnahme des Schaltwandlers während des Ansteuerintervalls größer ist als die.Leistungsaufnahme einer an den Schaltwandler angeschlossenen Last Z steigt die Ausgangsspannung Vout während des Ansteuerintervalls an, d. h. das Regelsignal Vreg sinkt ab. Der Ansteuerintervall endet in dem dargestellten Beispiel zu einem Zeitpunkt t3, zu dem das Regelsignal Vreg bis auf einen dritten Referenzwert Vboff abgesunken ist. Während der nachfolgenden Ansteuerpause bleibt der Schalter gesperrt, wodurch das Regelsignal Vreg wieder ansteigt, bis dieses zu einem weiteren Zeitpunkt t4 wieder den Wert des zweiten Referenzwertes Vbon erreicht. Dieser Wechsel zwischen Ansteuerintervall und Ansteuerpause während des Burst-Betriebszustandes setzt sich fort, bis der Leistungsbedarf der Last Z während des Burst-Betriebsmodus nicht mehr gedeckt werden kann, so dass das Regelsignal Vreg bis auf einen vierten Referenzwert Vbex, der größer ist als der zweite Referenzwert Vbon ansteigt. Ein Anstieg des Regelsignals Vreg bis auf diesen oberen Referenzwert Vbex bewirkt einen Übergang vom Burst-Betriebsmodus B in den Normalbetriebsmodus N.

Eine mögliche Realisierung einer Ansteuersignalerzeugungsschaltung mit der zuvor erläuterten Funktionalität wird nachfolgend anhand von Figur 4 erläutert. Die in Figur 4 dargestellte Ansteuersignalerzeugungsschaltung 2 weist einen Pulsweitenmodulator 21 und eine Betriebszustandsschaltung 22 auf, die den Betriebszustand anzeigende erste und zweite Betriebszustandssignale ST1, ST2 erzeugt. Diese Betriebszustandssignale, von denen ein erstes Betriebszustandssignal ST1 angibt, ob sich der Schaltwandler im Normalbetriebszustand oder im Burst-Betriebszustand befindet, und von denen ein zweites Betriebszustandssignal ST2 angibt, ob sich der Schaltwandler innerhalb des Burst-Betriebszustandes in einem Ansteuerintervall oder in einer Ansteuerpause befindet, werden durch die Betriebszustandsschaltung 22 abhängig von einem Vergleich des Regelsignals Vreg mit den Referenzsignalen Vbon, Vboff, Vben und Vbex erzeugt. Das erste Zustandssignal ST1 steht bei dieser Schaltung am Ausgang eines ersten Flip-Flops 221 zur Verfügung, das durch einen ersten Komparator 223 abhängig von einem Vergleich des ersten Referenzsignals Vben mit dem Regelsignal Vreg gesetzt wird und das durch einen zweiten Komparator 224 abhängig von einem Vergleich des vierten Referenzsignals Vbex mit dem Regelsignal Vreg zurückgesetzt wird. Ein Ausgang des ersten Komparators 223 ist hierbei an den Setz-Eingang S des ersten Flip-Flops 221 angeschlossen und ein Ausgang des zweiten Komparators 224 ist an einen Rücksetzeingang R dieses Flip-Flops 221 angeschlossen. Das erste Flip-Flop 221 wird in dem dargestellten Beispiel gesetzt, wenn das Regelsignal Vreg unter den ersten Referenzwert Vben absinkt und wird zurückgesetzt, wenn das Regelsignal Vreg über den Wert des vierten Referenzsignals Vbex ansteigt. Das erste Zustandssignal ST1 ist ein zweiwertiges Signal, das während des Burst-Betriebs einen High-Pegel und während des Normalbetriebs einen Low-Pegel annimmt.

Das zweite Zustandssignal ST2 steht am Ausgang eines zweiten Flip-Flops 222 zur Verfügung, das durch einen dritten Komparator 225 abhängig von einem Vergleich des dritten Referenzsignals Vbon mit dem Regelsignal Vreg gesetzt wird und durch einen vierten Komparator 226 abhängig von einem Vergleich des dritten Referenzsignals Vboff mit dem Regelsignal Vreg zurückgesetzt wird. Ein Ausgang des dritten Komparators 225 ist hierbei an den Setz-Eingang des zweiten Flip-Flops 222 angeschlossen, und ein Ausgang des vierten Komparators 226 ist an den Rücksetz-Eingang dieses zweiten Flip-Flops 222 angeschlossen. Das Flip-Flop 222 wird gesetzt, wenn das Regelsignal Vreg über den Wert des zweiten Referenzsignals Vbon ansteigt und wird zurückgesetzt, wenn das Regelsignal Vreg unter den Wert des zweiten Referenzsignals Vboff absinkt. Das zweite Zustandssignal ST2 ist in dem Beispiel ein zweiwertiges Signal, das im Burst-Betriebs während der Ansteuerintervalle einen High-Pegel annimmt und im Burst-Betrieb während der Ansteuerpausen einen Low-Pegel annimmt.

Das zweite und dritte Referenzsignal Vbon, Vboff werden in nicht näher dargestellter Weise durch eine Referenzsignalerzeugungsschaltung (nicht dargestellt) erzeugt. Zur Bereitstellung der ersten und vierten Referenzsignale Vben, Vbex ist eine weitere Referenzsignalerzeugungsschaltung 25 vorgesehen, deren Aufbau und Funktionsweise nachfolgend noch erläutert werden wird.

Das Ansteuersignal S2 wird durch den Pulsweitenmodulator 21 in einer anhand der Figuren 2A und 2B bereits erläuterten Weise erzeugt, und zwar abhängig von dem Regelsignal Vreg, dem Strommesssignal Vcs sowie den zwei den jeweiligen Betriebszustand vorgebenden Zustandssignalen ST1, ST2.

Ein mögliches Realisierungsbeispiel einer die ersten und vierten Referenzsignale Vben, Vbex bereitstellenden Referenzsignalerzeugungsschaltung 25 ist in Figur 5 dargestellt. Diese Referenzsignalerzeugungsschaltung umfasst einen Spannungsteiler mit Spannungsteilerwiderständen R1, R2, die in Reihe zwischen eine Klemme für das Versorgungspotential Vdd der Ansteuersignalerzeugungsschaltung 2 und das primärseitige Bezugspotential GND 1 geschaltet sind.

Der Spannungsteiler R1, R2 ist in dem dargestellten Beispiel über den Messeingang 12 und den Strommesswiderstand Rs an das primärseitige Bezugspotential GND1 angeschlossen, so dass die Ansteuerschaltung (1 in Figur 1) keine zusätzliche Anschlussklemme zum Anschließen dieses Spannungsteilers an das primärseitige Bezugspotential GND1 benötigt.

Die Referenzsignalerzeugungsschaltung 25 umfasst außerdem ein Abtast- und Halteglied 26, das zwischen einen Mittenabgriff des Spannungsteilers und das primärseitige Bezugspotential GND1 geschaltet ist, in dem Beispiel also parallel zu der Reihenschaltung des zweiten Spannungsteilerwiderstandes R2 und des Strommesswiderstandes Rs geschaltet ist. Dieses Abtast- und Halteglied 26 dient zur Erfassung einer über der Reihenschaltung des zweiten Spannungsteilerwiderstandes R2 und des Strommesswiderstandes Rs anliegenden Spannung nach Maßgabe eines Freigabesignals EN und zur Bereitstellung einer der beiden ersten und vierten Referenzspannungen Vben, Vbex. Das Bezugszeichen Vref in Figur 5 steht hierbei für eine dieser beiden Referenzspannungen. Bei sperrend angesteuertem Schalter T, d. h. bei einem Primärstrom I=0, gilt für den Spannungsabfall über der Reihenschaltung mit dem zweiten Spannungsteilerwiderstand R2 und dem Strommesswiderstand Rs, und damit für die Referenzspannung Vref:

$$Vref = (R2+Rs)/(R1+R2+Rs) \cdot Vdd \qquad (1a).$$

Unter der Annahme, dass der zweite Spannungsteilerwiderstand R2 wesentlich größer ist als der Messwiderstand Rs gilt für diese Referenzspannung Vref:

$$Vref = R2/(R1+R2) \cdot Vdd \qquad (1b).$$

Die Referenzspannung Vref ist somit über das Teilerverhältnis des Spannungsteilers proportional zu dem Versorgungspotential Vdd der Ansteuersignalerzeugungsschaltung 25. Dieses Versorgungspotential Vdd, das durch die Spannungsversorgungsschaltung 4 erzeugt wird, kann in eingeschwungenem Zustand des Schaltwandlers als annähernd konstant angesehen werden. Die Referenzspannung Vref ist damit über den Spannungsteiler R1, R2 einstellbar.

Die Ansteuerschaltung (1 in Figur 1) kann teilweise als integrierte Schaltung realisiert sein. Der zweite Spannungsteilerwiderstand R2 kann hierbei als externer Widerstand realisiert sein, der über eine Anschlussklemme 12' an die integrierten Schaltung angeschlossen ist. Der erste Widerstand R1 kann hierbei zusammen mit weiteren Schaltungskomponenten der Ansteuerschaltung 1 in der integrierten Schaltung realisiert sein. Die Referenzspannung Vref kann bei dieser Anordnung über den zweiten Spannungsteilerwiderstand R2 in Kenntnis des Widerstandswertes des integrierten ersten Spannungsteilerwiderstandes R1 und in Kenntnis der Versorgungsspannung Vdd exakt und auf einfache Weise eingestellt werden. Der zweite Spannungsteilerwiderstand R2 funktioniert hierbei als Einstellwiderstand für den wenigstens einen durch die Referenzsignalerzeugungsschaltung 25 erzeugten Referenzwert.

Eine Einstellung des Referenzwertes kann hierbei bedarfsgerecht vorgenommen werden und zwar beispielsweise abhängig von der Art der Last, die durch den Schaltwandler versorgt werden soll. Die Referenzwerte, bei denen ein Übergang vom Normalbetrieb in den Burst-Betrieb, bzw. ein Übergang vom Burst-Betrieb in den Normalbetrieb erfolgt, repräsentieren jeweils unterschiedliche Ausgangsleistungen des Schaltwandlers. Bei der erläuterten Ansteuerschaltung können die Ausgangsleistungen, bei denen ein Wechsel zwischen dem Normalbetrieb und dem Burst-Betrieb erfolgt flexibel über den zweiten Spannungsteilerwiderstand R2 eingestellt werden.

Das Freigabesignal EN ist bei der dargestellten Referenzsignalerzeugungsschaltung 25 vom Schaltzustand des Schalters T abhängig und ist so gewählt, dass das Abtast- und Halteglied nur während solcher Zeitdauern zur Abtastung der über dem Spannungsteiler anliegenden Spannung freigegeben ist, während der der Schalter T sperrt. Hierdurch wird verhindert, dass sich dem Referenzsignal Vref eine Signalkomponente überlagert, die von einem Strom durch den Schalter T abhängig ist.

Zur Erzeugung des vierten Referenzwertes Vbex, der einen Übergang vom Burst-Betrieb in den Normalbetrieb bestimmt, erfolgt eine Abtastung der über dem Spannungsteiler R1, R2 anliegenden Spannung im Burst-Modus beispielsweise während Ansteuerpausen. Das Freigabesignal EN kann hierzu beispielsweise dem zweiten Zustandssignal (ST2 in Figur 4) entsprechen, wobei das Abtast- und Halteglied 26 bei Verwendung einer in Figur 4 dargestellten Betriebszustandsschaltung 22 so realisiert ist, dass das Abtast- und Halteglied bei einem Low-Pegel des Freigabesignals die Spannung über dem Spannungsteiler abtastet.

Das Freigabesignal EN kann jedoch auch unmittelbar von dem Ansteuersignal S2 des Schalters T abgeleitet sein, beispielsweise zur Erzeugung des ersten Referenzwertes, der den Übergang vom Normalbetriebszustand in den Burst-Betriebszustand bestimmt.

Die am Ausgang des Abtast- und Halteglieds zur Verfügung stehende Referenzspannung Vref kann als eine der beiden ersten und vierten Referenzspannungen Vben, Vbex verwendet werden. Ein Realisierungsbeispiel einer Referenzsignalerzeugungsschaltung 25, die beide der ersten und vierten Referenzspannungen Vben, Vbex erzeugt, ist in Figur 6 dargestellt. Diese Referenzsignalerzeugungsschaltung 25 umfasst einen Spannungsteiler mit drei Spannungsteilerwiderständen R1, R2, R3, der beispielsweise aus dem Spannungsteiler gemäß Figur 5 durch Einfügen eines zusätzlichen Spannungsteilerwiderstandes R3 zwischen dem ersten und zweiten Spannungsteilerwiderstand R1, R2 hervorgeht. Ein erstes Abtast- und Halteglied ist bei dieser Schaltungsanordnung an einen ersten Spannungsabgriff des Spannungsteilers zwischen dem zweiten und dritten Spannungsteilerwiderstand R2, R3 angeschlossen und stellt an seinem Ausgang die vierte Referenzspannung Vboff zur Verfügung. Die Referenzsignalerzeugungsschaltung 25 weist ein weiteres Abtast- und Halteglied auf, das an einen zweiten Spannungsabgriff des Spannungsteilers zwischen dem ersten und dritten Spannungsteilerwiderstand R1, R3 angeschlossen ist und das an seinem Ausgang die erste Referenzspannung Vben bereitstellt. Das Freigabesignal EN wird bei dieser Anordnung beispielsweise unmittelbar aus dem Ansteuersignal S2 des Schalters T abgeleitet.

Ein Realisierungsbeispiel für die Abtast- und Halteglieder wird nachfolgend anhand von Figur 6 für das erste Abtast- und Halteglied 26 erläutert. Das Abtast- und Halteglied 26 umfasst eine Reihenschaltung eines Schalters 261 und eines Kondensators 262, die zwischen den Spannungseingang des Abtast- und Haltegliedes 26 und das primärseitige Bezugspotential GND1 geschaltet sind. Der Schalter 261 ist durch das Freigabesignal EN angesteuert und wird bei einem vorgegebenen Signalpegel, das heißt dem Signalpegel, bei dem das Freigabesignal EN die das ansteuernde Halteglied 26 freigibt, leitend angesteuert, um dadurch den Kondensator 262 auf die am Spannungseingang anliegende Spannung aufzuladen. Die über dem Kondensator 262 anliegende Spannung entspricht hierbei der Referenzspannung Vref.

In nicht näher, dargestellter Weise kann der Schalter 261 in Figur 7 durch einen durch das Freigabesignal EN gesteuerten Spannungsfolger ersetzt werden.

Ein weiteres Realisierungsbeispiel eines Abtast- und Halteglieds ist in Figur 8 dargestellt. Dieses Abtast- und Halteglied erzeugt aus der über dem Kondensator 262 anliegende Referenzspannung Vref zwei Referenzspannungen indem der Kondensator 262 an einen Analog-Digital-Wandler 264 angeschlossen ist, der einen der Spannung über dem Kondensator 262 entsprechenden Digitalwert bereitstellt. Eine dem Analog-Digital-Wandler 264 nachgeschaltete Verarbeitungseinheit 265 erzeugt aus diesem Digitalwert die beiden Referenzspannungen Vben, Vbex.

Es sei darauf hingewiesen, dass in entsprechender Weise wie die erste und vierte Referenzspannung Vben, Vbex auch die zweite und dritte Referenzspannung Vbon, Vboff durch eine der zuvor erläuterten Referenzsignalerzeugungsschaltungen erzeugt, und damit bedarfsgerecht eingestellt werden kann.

Ein mögliches Realisierungsbeispiel für den Pulsweitenmodulator 21, der abhängig von dem Regelsignal Vreg, dem Strommesssignal Vcs und den beiden Zustandssignalen ST1, ST2 das Ansteuersignal S2 bereitstellt, ist in Figur 9 dargestellt. Diese Pulsweitenmodulationsschaltung 21 umfasst zwei Pulsweitenmodulatoren 23, 24, denen jeweils ein Taktsignal CLK eines Taktgenerators 211 zugeführt ist. Ein erster Pulsweitenmodulator 23 erzeugt ein erstes pulsweitenmoduliertes Signal S23 abhängig von dem Taktsignal CLK, dem Regelsignal Vreg und dem Strommesssignal Vcs das einem Multiplexer 218 zugeführt ist. Ein zweiter Pulsweitenmodulator 24 erzeugt ein zweites pulsweitenmoduliertes Signal 24 abhängig von dem Taktsignal CLK und dem zweiten Zustandssignal ST2, das ebenfalls dem Multiplexer 218 zugeführt ist. Der Multiplexer 218 ist angesteuert durch das erste Zustandssignal ST1 und gibt während des Normalbetriebs das erste pulsweitemodulierte Signal S23 als Steuersignal S2 und während des Burst-Betriebs das zweite pulsweitenmodulierte Signal S24 als Ansteuersignal S2 weiter.

Der erste Pulsweitenmodulator 23 umfasst ein Flip-Flop 212, dessen Setzeingang S das Taktsignal CLK zugeführt ist und das damit im Takt dieses Taktsignal S gesetzt wird. An einen Rücksetzeingang R dieses Flip-Flops 212 ist ein Ausgang eines Komparators 214 angeschlossen, dem das Strommesssignal Vcs und das Regelsignal Vreg zugeführt sind und der das Flip-Flop 212 jeweils dann zurücksetzt, wenn das Strommesssignal Vcs' bis auf den Wert des Regelsignals Vreg angestiegen ist.

Der zweite Pulsweitenmodulator 24 umfasst ein weiteres Flip-Flop 213, dessen Setzeingang S das Taktsignal CLK nach Maßgabe des zweiten Zustandssignals ST2 über einen Schalter 217 zugeführt ist. Dieser Schalter 217 ist gesteuert durch das zweite Zustandssignal ST2 während Ansteuerintervallen geschlossen, um das Flip-Flop 213 getaktet durch das Taktsignal CLK zu setzen. Das dem Setzeingang S des Flip-Flops 213 zugeführte Signal ist dem Rücksetzeingang R des Flip-Flops 213 zeitverzögert über ein Verzögerungsglied 216 zugeführt, um das Flip-Flop 213 jeweils eine vorgegebene Zeitdauer, die der gewünschten Impulsdauer während des Burst-Betriebs (Tbp in Figur 2B) entspricht, wieder zurückzusetzen. Optional ist dem Rücksetzeingang R dieses Flip-Flops 213 ein ODER-Gatter 215 vorgeschaltet, dem das Ausgangssignal des Verzögerungsglieds 216 und das zweite Zustandssignal ST2 zugeführt ist. Dieses ODER-Gatter 215 stellt sicher, dass das Flip-Flop 213 während des Burst-Betriebs bei einem Wechsel von einem Ansteuerintervall zu einer Ansteuerpause sicher zurückgesetzt wird. Das zweite Betriebszustandssignal, das bei einem Übergang von einem Ansteuerintervall zu einer Ansteuerpause auf einen Low-Pegel wechselt, ist dem ODER-Gatter hierbei über einen invertierenden Eingang zugeführt.

## Patentansprüche

1. Ansteuerschaltung für einen in Reihe zu einem induktiven Speicherelement (L1) geschalteten Schalter (T) in einem Schaltwandler, die
einen Ausgang (11) zur Bereitstellung eines Ansteuersignals (S3) für den Schalter (T),
einen Messeingang (12) zum Zuführen eines von einem Strom (I) durch den Schalter (T) abhängigen Messsignals (Vcs),
einen Regelsignaleingang (13) zum Zuführen eines eine Leistungsaufnahme regelnden Regelsignals (Vreg),
eine Signalerzeugungsschaltung (2) die das Ansteuersignal (S3) erzeugt, und die abhängig von einem Vergleich des Regel-signals (Vreg) mit einem ersten Referenzwert (Vbon) von einem Normalbetriebszustand in einen Burst-Betriebszustand übergeht und abhängig von einem Vergleich des Regelsignals (Vreg) mit einem zweiten Referenzwert (Vboff) von dem Burst-Betriebszustand in den Normalbetriebszustand übergeht, und
eine Referenzsignalerzeugungsschaltung (25), die zwischen eine Klemme für ein Versorgungspotential (Vdd) und den Messeingang (12) geschaltet ist und die wenigstens einen der ersten und zweiten Referenzwerte (Vbon, Vboff) erzeugt, aufweist.

2. Ansteuerschaltung nach Anspruch 1, bei der die Referenzsignalerzeugungsschaltung (25) einen zwischen die Klemme für das Versorgungspotential (Vdd) und den Messeingang (12) geschalteten Spannungsteiler (R1, R2) aufweist.

3. Ansteuerschaltung nach Anspruch 2, bei der die Referenzsignalerzeugungsschaltung (25) ein an den. Spannungsteiler gekoppeltes Abtast- und Halteglied (26; 261-265) aufweist, an dem die wenigstens eine der Referenzspannungen (Vbon, Vboff) zur Verfügung steht.

4. Ansteuerschaltung nach Anspruch 3, bei der dem Abtast- und Halteglied (26; 261-265) ein Freigabesignal (EN) zugeführt ist, das von einem Ansteuerzustand des Schalters (T) abhängig ist.

5. Ansteuerschaltung nach Anspruch 4, bei der das Freigabesignal (EN) das Abtast- und Halteglied (26; 261-265) freigibt, wenn der Schalter (T) sperrt.

6. Ansteuerschaltung nach Anspruch 4, bei dem das Freigabesignal (EN) das Abtast- und Halteglied (26; 261-265) im Burst-Betriebszustand während einer Ansteuerpause freigibt.

7. Ansteuerschaltung nach einem der vorangehenden Ansprüche, bei der die Referenzsignalerzeugungsschaltung (25) den ersten und zweiten Referenzwert (Vbon, Vboff) zur Verfügung erzeugt.

8. Ansteuerschaltung nach Anspruch 7, bei der die Referenzsignalerzeugungsschaltung einen Spannungsteiler (R1, R2, R3) mit zwei Abgriffen aufweist, wobei an einem der Abgriffe das erste Referenzsignal (Vbon) und an dem anderen der Abgriffe das zweite Referenzsignal (Vboff) zur Verfügung steht.

9. Ansteuerschaltung nach einem der vorangehenden Ansprüche, die teilweise als integrierte Schaltung realisiert ist und bei der die Referenzsignalerzeugungsschaltung (25) einen Einstellwiderstand (R2) aufweist, der als externer Widerstand der integrierten Schaltung realisiert ist.

## Claims

1. Drive circuit for a switch (T) connected in series with an inductive storage element (L1) in a switching converter, having an output (11) for providing a drive signal (S3) for the switch (T),
a measurement input (12) for feeding in a measurement signal (Vcs) dependent on a current (I) through the switch (T),
a regulation signal input (13) for feeding in a regulation signal (Vreg) that regulates a power consumption,
a signal generating circuit (2), which generates the drive signal (S3) and which undergoes transition from a normal operating state to a burst operating state depending on a comparison of the regulation signal (Vreg) with a first reference value (Vbon) and undergoes transition from the burst operating state to the normal operating state depending on a comparison of the regulation signal (Vreg) with a second reference value (Vboff), and
a reference signal generating circuit (25), which is connected between a terminal for a supply potential (Vdd) and the measurement input (12) and which generates at least one of the first and second reference values (Vbon, Vboff).

2. Drive circuit according to Claim 1, in which the reference signal generating circuit (25) has a voltage divider (R1, R2) connected between the terminal for the supply potential (Vdd) and the measurement input (12).

3. Drive circuit according to Claim 2, in which the reference signal generating circuit (25) has a sample and hold element (26; 261-265) which is coupled to the voltage divider and at which the at least one of the reference voltages (Vbon, Vboff) is available.

4. Drive circuit according to Claim 3, in which an enable signal (EN) is fed to the sample and hold element (26; 261-265), said enable signal being dependent on a drive state of the switch (T).

5. Drive circuit according to Claim 4, in which the enable signal (EN) enables the sample and hold element (26; 261-265) if the switch (T) is turned off.

6. Drive circuit according to Claim 4, in which the enable signal (EN) enables the sample and hold element (26; 261-265) in the burst operating state during a driving pause.

7. Drive circuit according to any of the preceding claims, in which the reference signal generating circuit (25) generates and makes available the first and second reference values (Vbon, Vboff).

8. Drive circuit according to Claim 7, in which the reference signal generating circuit has a voltage divider (R1, R2, R3) having two taps, the first reference signal (Vbon) being available at one of the taps and the second reference signal (Vboff) being available at the other of the taps.

9. Drive circuit according to any of the preceding claims, which is realized in part as an integrated circuit and in which the reference signal generating circuit (25) has a variable resistor (R2) realized as an external resistor of the integrated circuit.

## Revendications

1. Circuit de commande d'un commutateur (T) monté en série avec un élément (L1) inductif de mémoire dans une alimentation à découpage, qui a
une sortie (11) pour la mise à disposition d'un signal (S3) de commande du commutateur (T),
une entrée (12) de mesure, pour l'envoi d'un signal (Vcs) de mesure en fonction d'un courant (I) dans le commutateur (T),
une entrée (13) de signal de régulation, pour l'envoi d'un signal (Vreg) de régulation régulant une absorption de puissance,

un circuit (2) de production de signal, qui produit le signal (S3) de commande et qui, en fonction d'une comparaison du signal (Vreg) de régulation à une première valeur (Vbon) de référence, passe d'un état de fonctionnement normal à un état de fonctionnement en rafale et, en fonction d'une comparaison du signal (Vreg) de régulation à une deuxième valeur (Vboff) de référence, passe de l'état de fonctionnement en rafale à l'état de fonctionnement normal, et un circuit (25) de production d'un signal de référence, qui est monté entre une borne pour un potentiel (Vdd) d'alimentation et l'entrée (12) de mesure et qui produit au moins l'une des première et deuxième valeurs (Vbon, Vboff) de référence.

**2.** Circuit de commande suivant la revendication 1, dans lequel le circuit (25) de production d'un signal de référence a un diviseur (R1, R2) de tension, monté entre la borne pour le potentiel (Vdd) d'alimentation et l'entrée (12) de mesure.

**3.** Circuit de commande suivant la revendication 2, dans lequel le circuit (25) de production d'un signal de référence a un élément (26, 261 à 265) d'échantillonnage et de maintien, qui est couplé au diviseur de tension et sur lequel est disponible la au moins une des tensions (Vbon, Vboff) de référence.

**4.** Circuit de commande suivant la revendication 3, dans lequel il est envoyé à l'élément (26), 261 à 265) d'échantillonnage et de maintien un signal (EN) de libération qui dépend d'un état de commande du commutateur (T).

**5.** Circuit de commande suivant la revendication 4, dans lequel le signal (EN) de libération libère l'élément (26, 261 à 265) d'échantillonnage et de maintien lorsque le commutateur (T) bloque.

**6.** Circuit de commande suivant la revendication 4, dans lequel le signal (EN) de libération libère l'élément (26, 261 à 265) d'échantillonnage et de maintien à l'état de fonctionnement en rafale pendant une pause de commande.

**7.** Circuit de commande suivant l'une des revendications précédentes, dans lequel le circuit (25) de production d'un signal de référence produit la première et la deuxième valeurs (Vbon Vboff) de référence en les mettant à disposition.

**8.** Circuit de commande suivant la revendication 7, dans lequel le circuit de production d'un signal de référence a un diviseur (R1, R2, R3) de tension, ayant deux prises, le premier signal (Vbon) de référence étant disponible à l'une des prises et le deuxième signal (Vboff) de référence étant disponible à l'autre des prises.

**9.** Circuit de commande suivant l'une des revendications précédentes, qui est réalisé en partie sous forme de circuit intégré et dans lequel le circuit (25) de production d'un signal de référence a une résistance (R2) de réglage, qui est réalisée sous la forme d'une résistance extérieure du circuit intégré.

FIG 1

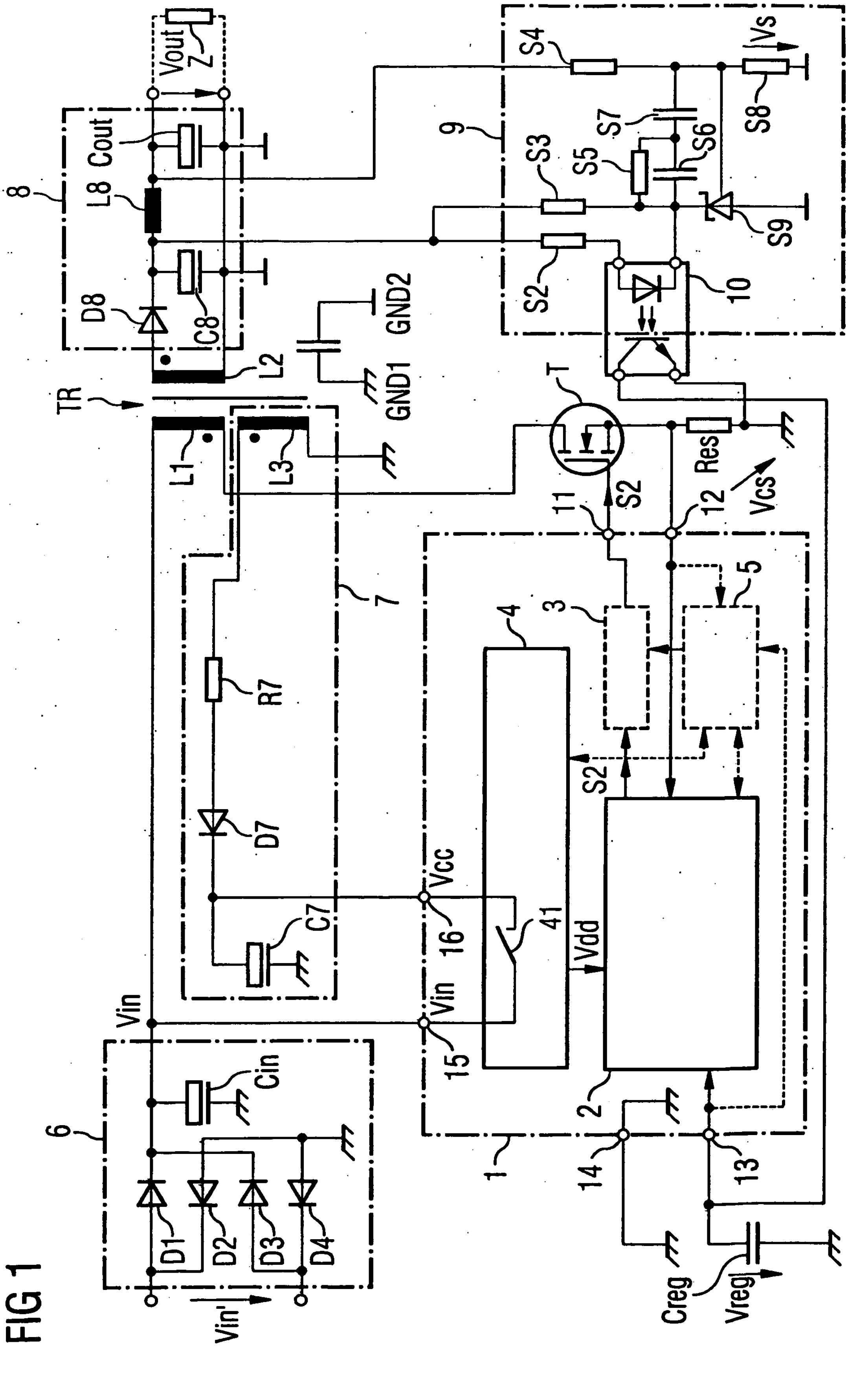

TR
L1
L2
L3
L8
Cout
Vout
Z
8
D8
C8
GND1
GND2
9
S2
S3
S4
S5
S6
S7
S8
S9
Vs
10
T
Res
Vcs
11
12
7
R7
D7
C7
Vcc
16
41
Vdd
Vin
15
4
3
5
2
1
14
13
6
Cin
D1
D2
D3
D4
Vin'
Creg
Vreg

FIG 2A

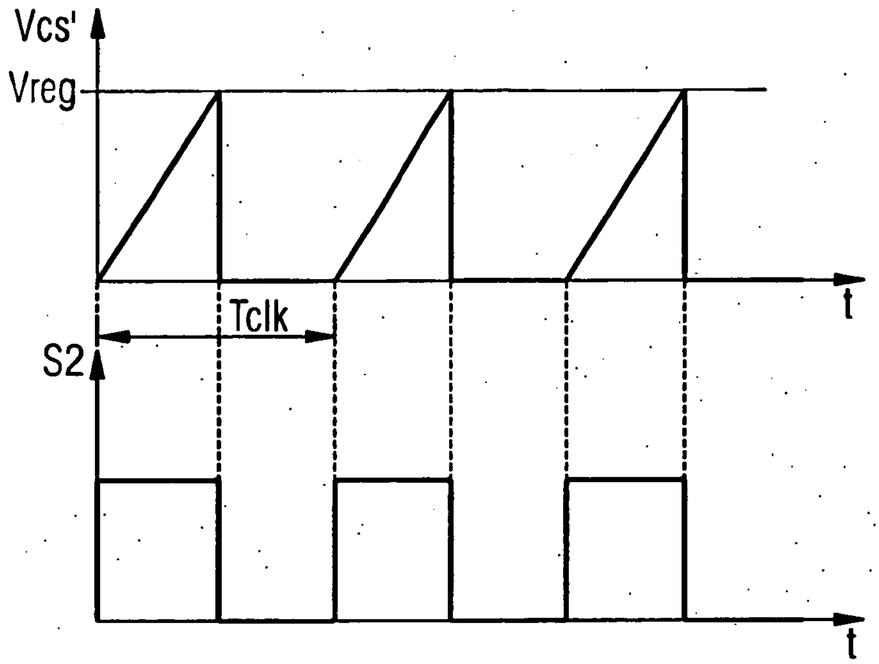


FIG 2B

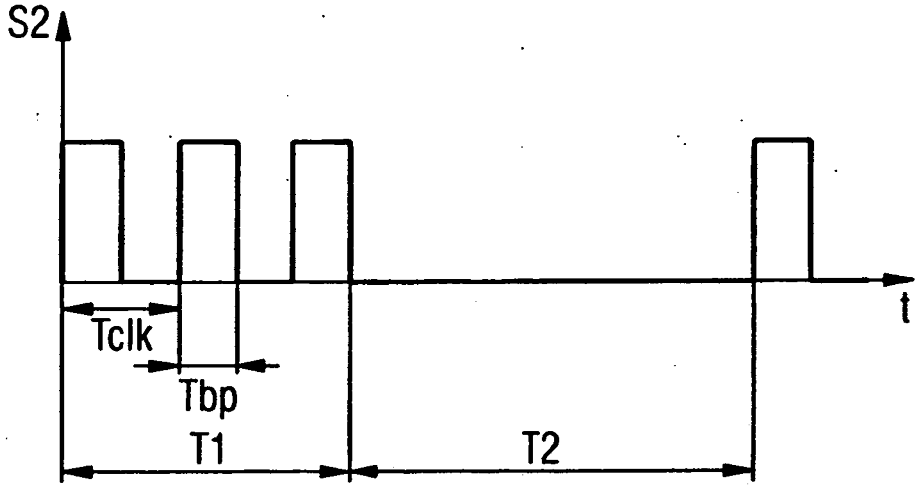

FIG 3

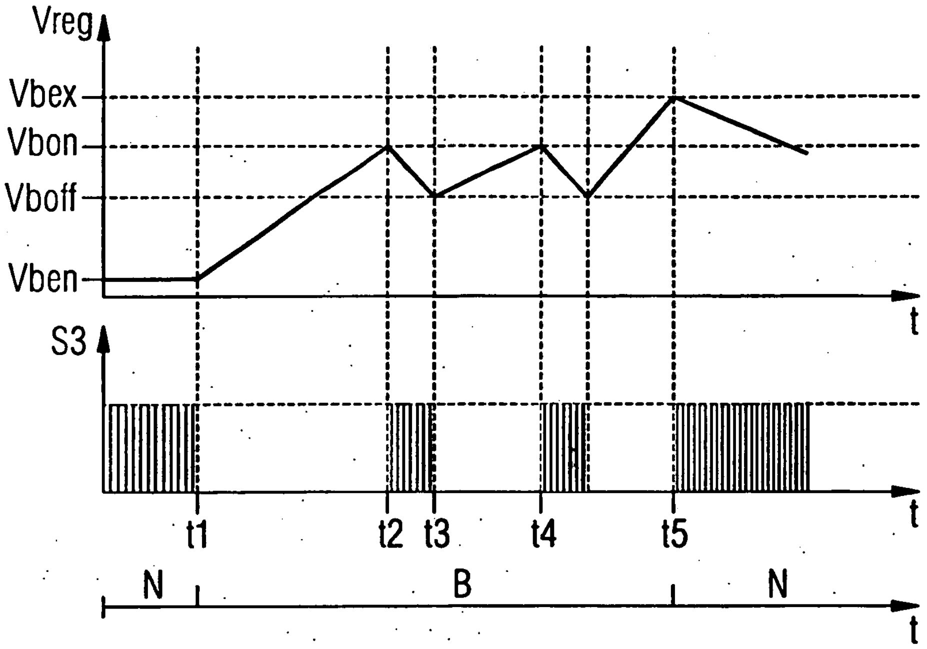
Vreg
Vbex
Vbon
Vboff
Vben
t
S3
t
t1
t2
t3
t4
t5
N
B
N
t

FIG 4

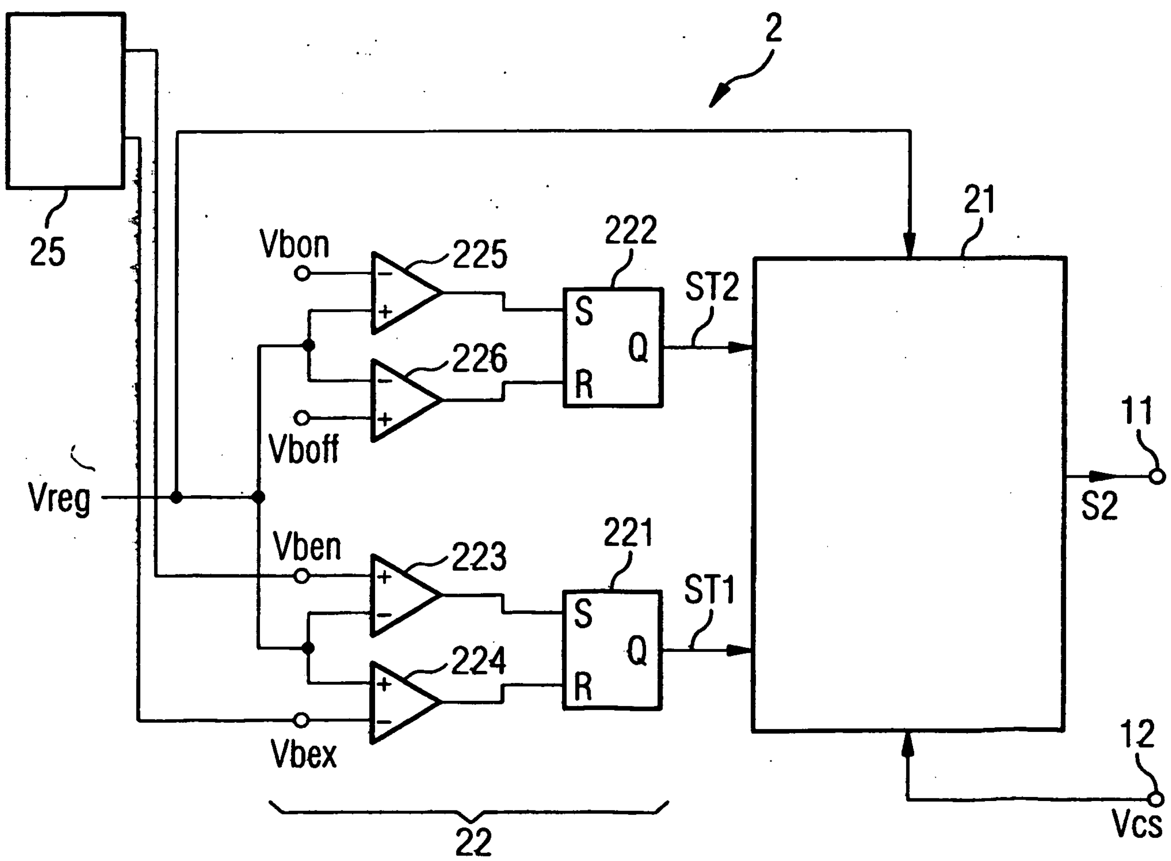
2
25
21
Vbon
225
222
ST2
S
Q
R
226
Vboff
11
Vreg
S2
Vben
223
221
ST1
S
Q
R
224
Vbex
12
Vcs
22

FIG 5

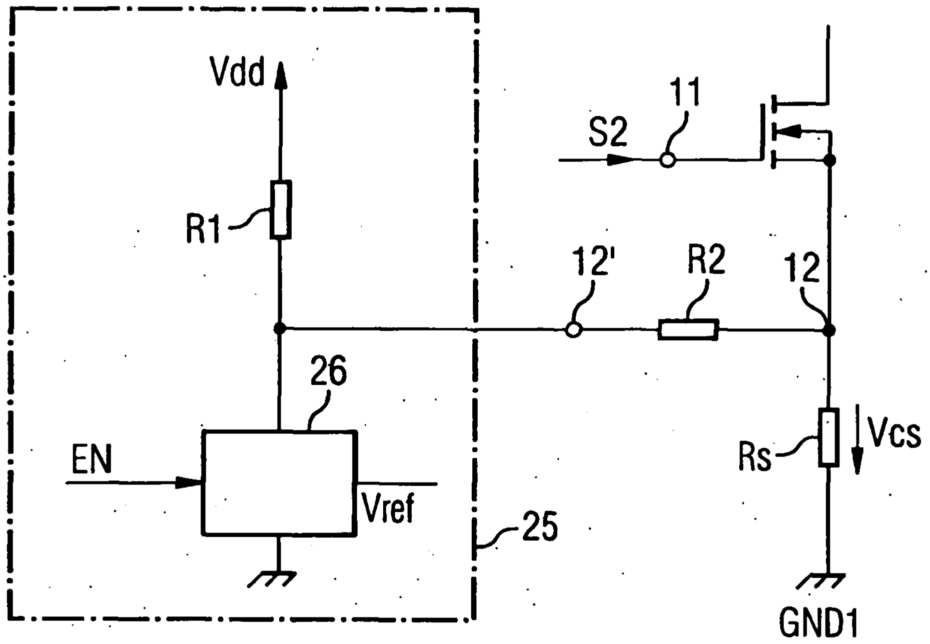
Vdd
R1
26
EN
Vref
25
S2
11
12'
R2
12
Rs
Vcs
GND1

FIG 6

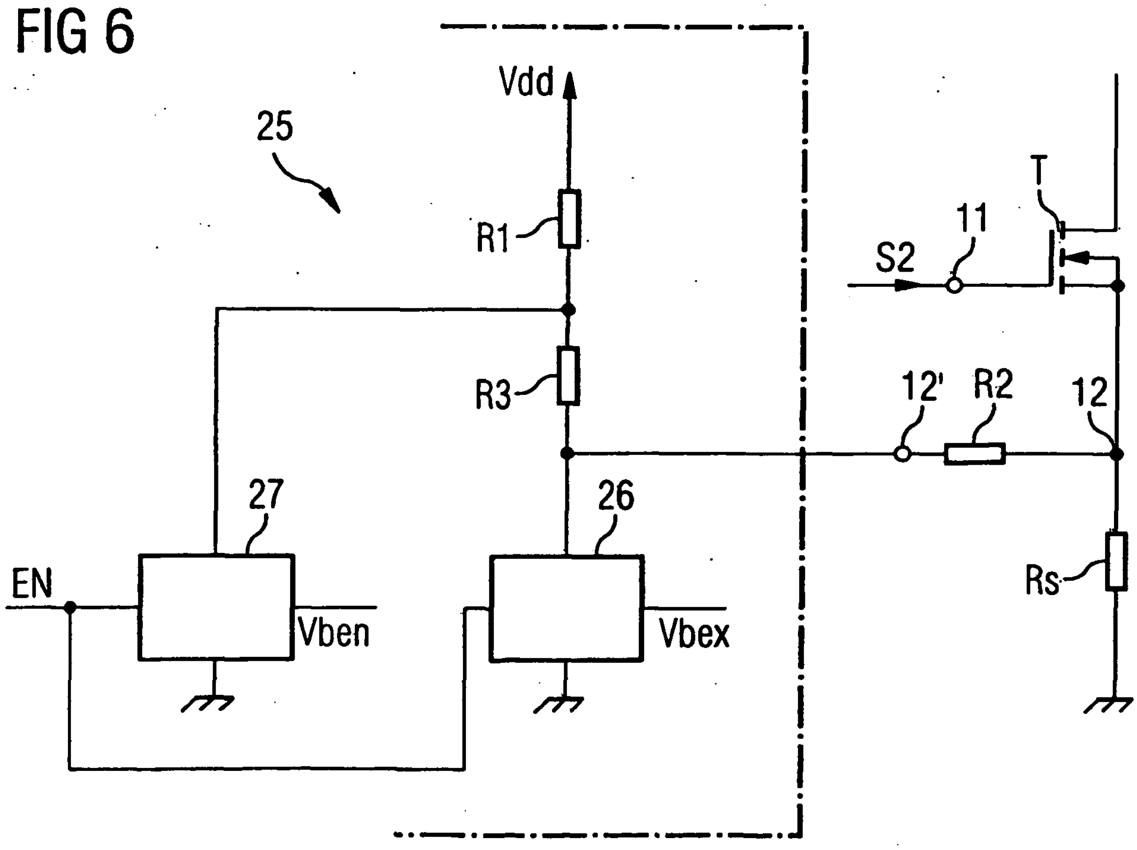
Vdd
25
R1
R3
27
26
EN
Vben
Vbex
S2
11
T
12'
R2
12
Rs

FIG 7

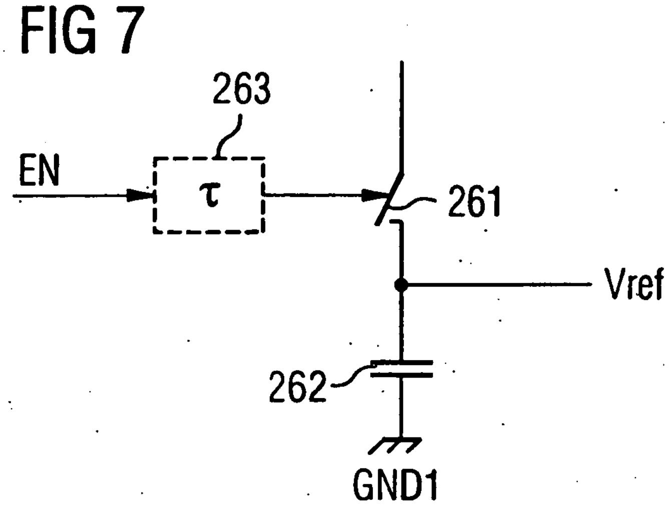
263
EN
τ
261
Vref
262
GND1

FIG 8

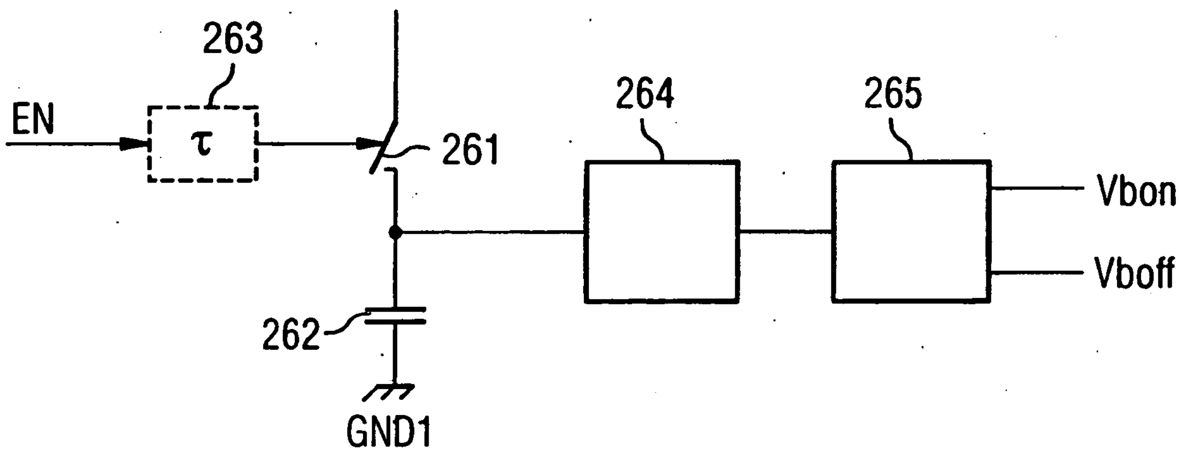
263
EN
τ
261
264
265
Vbon
Vboff
262
GND1

FIG 9

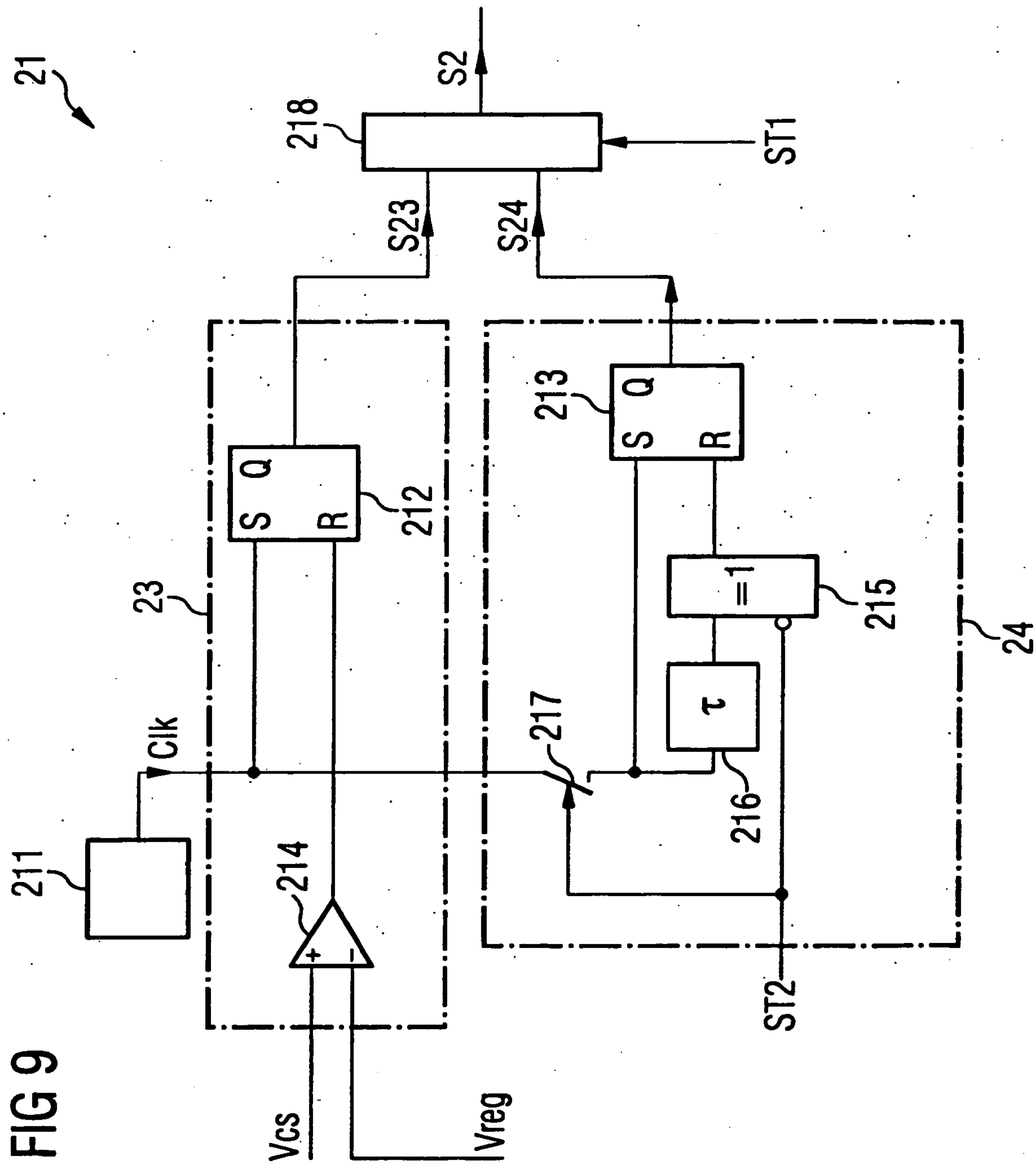
21
211
Clk
23
212
S
Q
R
214
+
-
Vcs
Vreg
S23
S24
218
S2
ST1
213
S
Q
R
=1
215
τ
216
217
24
ST2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4937738 A
- US 5703764 A
- US 6166926 A
- DE 10205706 A1
- US 20030117813 A1
- DE 10146549 A1
- WO 2004030194 A1